Europäisches Patentamt

European Patent Office

Office européen des brevets

(19)

(11) Numéro de publication: **0 042 788**
**B1**

(12) **FASCICULE DE BREVET EUROPEEN**

(45) Date de publication du fascicule du brevet: **21.11.84**

(51) Int. Cl.³: **H 01 B 17/00,** H 01 G 4/30

(21) Numéro de dépôt: **81400966.8**

(22) Date de dépôt: **17.06.81**

(54) **Diviseurs de tension capacitifs moyenne tension.**

(30) Priorité: **20.06.80 FR 8014051**

(43) Date de publication de la demande:
**30.12.81 Bulletin 81/52**

(45) Mention de la délivrance du brevet:
**21.11.84 Bulletin 84/47**

(84) Etats contractants désignés:
**BE CH DE GB IT LI NL SE**

(56) Documents cités:
**CH-A- 468 060**
**DE-A-2 439 080**
**DE-B-1 297 177**
**FR-A- 878 646**
**FR-A-1 514 009**
**US-A-3 315 026**

(73) Titulaire: **Avocat, Jean Paul**
**4, rue Philippe Lebon**
**F-59500 Lambres-lez-Douai (FR)**

(72) Inventeur: **Avocat, Jean Paul**
**4, rue Philippe Lebon**
**F-59500 Lambres-lez-Douai (FR)**

(74) Mandataire: **Ecrepont, Robert**
**Cabinet LEMOINE 12, Boulevard de la Liberté**
**F-59800 Lille (FR)**

Courier Press, Leamington Spa, England.

## Description

### Domaine technique

L'invention concerne un diviseur de tension capacitif moyenne tension comprenant un condensateur dont les armatures sont moulées dans une matière isolante et évitant les saillies à faible rayon de courbure dirigées l'une vers l'autre.

### Probelème posé

Il s'agit de prévoir des appareils dans les réseaux électriques moyenne tension, pour détecter la valeur ou la présence de tension sur des parties d'appareils, de lignes ou de câbles. La présence de courant peut être simplement constatée (voyant de signalisation) ou peut actionner un relais de télécommande ou de protection des installations électriques.

### Etat de la technique antérieure et inconvénients

On utilise, à cet effet, des diviseurs de tension à condensateur moyenne tension d'une capacité de quelques dizaines de picofarads branchés entre l'une des phases du réseau moyenne tension et la terre et placés en série avec une impédance basse tension combinant résistances, capacité, ampoules lumineuses, enroulement de relais ou de transformateurs, etc.

Le condensateur moyenne tension lui-même est souvent constitué par une pastille de céramique à très haut pouvoir inducteur spécifique, moulée à l'intérieur d'une masse de résine isolante thermodurcissable constituant, par ailleurs, un autre élément de l'appareillage électrique, par exemple in isolateur support, un transformateur de courant, un isolateur de traversée etc.

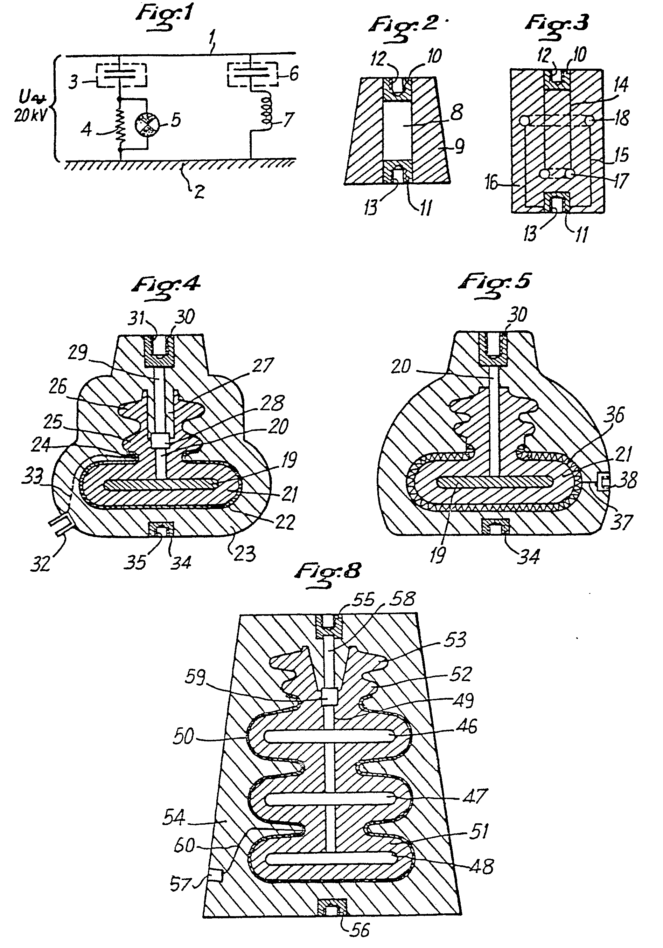

Cette disposition actuelle de l'état de la technique est représentée schématiquement à la figure 1 des dessins joints dans lesquels le repère (1) désigne une barre sous une tension de 20 kV par rapport à la masse (2) qui est supportée par un isolateur support dans lequel se trouve un condensateur (3) de très haute capacité capable de résister à une tension peu différente de 20 kV, ainsi qu'une résistance (4) en parallèle avec un voyant (5); de même un autre exemple d'isolateur support comprend un condensateur (6), similaire au condensateur (3), en série avec un enroulement (7) d'un relais ou d'un transformateur.

La figure 2 représente une première version d'un condensateur moyenne tension, tel que (3) ou (6), constitué par une pastille de céramique (8), à très haut pouvoir inducteur spécifique, moulée à l'intérieur d'une masse de résine (9) isolante et thermodurcissable qui constitue l'élément mécanique de l'appareillage électrique considéré, à savoir support, transformateur de courant, isolateur de traversée, etc. La pastille (8) est comprise entre deux éléments insérés (10) et (11) coulés dans la résine (9), en métal et comportant des filetages (12), (13) qui servent non seulement de supports mais aussi de bornes et d'armatures du condensateur ainsi réalisé.

A la figure 3, on a représenté une autre réalisation qui consiste à remplacer la pastille de céramique (8) par deux électrodes (14), (15), cylindriques découpées dans des feuilles ou du grillage métalliques et qui sont maintenues à une distance convenable l'une de l'autre pendant le moulage de la masse de résine (16). L'électrode (14) est reliée à l'élément inséré (10) avec son filetage (12) tandis que l'électrode (15) est reliée à l'élément inséré (11) avec son filetage (13).

Les deux réalisations des figures 2 et 3 présentent les inconvénients de développer des contraintes électriques très élevées dans certaines régions de la masse moulée ainsi que des contraintes mécaniques importantes du fait des coefficients de dilatation différents des éléments constitutifs. Dans le cas de la réalisation de la figure 3, on a remédié aux contraintés diélectriques élevées à l'aide d'anneaux de garde (17) et (18) dont la courbure est calculée de façon classique pour obtenir des contraintes acceptables dans les zones soumises aux effets de pointes. Toutefois, on se heurte toujours à des difficultés de mise en oeuvre notamment pour maintenir la bonne position relative des deux électrodes (14) et (15) pour qu'elles soient parfaitement concentriques. Comme cela est difficile à réaliser, le diviseur capacitif ainsi fabriqué demeure peu fiable.

La présente invention a pour but de remédier à ces inconvénients en apportant une solution économique à la fabrication des diviseurs capacitifs qui sont beaucoup plus fiables, moins encombrants et adaptés à la fabrication en grande quantité.

### Exposé de l'invention

Le diviseur capacitif de l'invention est caractérisé principalement par la combinaison:

a) d'une première armature constituée par au moins un disque épais, plan, à bords arrondis de rayon de courbure supérieur en tous points à la valeur susceptible d'amener une surcharge diélectrique dangereuse de l'isolant et qui est fonction du gradient électrique admissible dans celui-ci, ladite première armature étant supportée par une tige coaxiale cylindrique conductrice reliée à une borne correspondante à la première armature, éventuellement par au moins une deuxième tige reliée par vissage à la première;

b) d'une masse de matière diélectrique solide moulée autour de ladite première armature et de la naissance de la tige support à partir du disque, la paroi externe de ce diélectrique étant en tous points à une distance à peu près constante de cette première armature et de sa tige, sauf au niveau de la partie médiane de la tige support où cette masse forme un col avec des ombelles arrondies entourant ladite tige et un rentrant le long de la tige, la section comprenant l'axe de la tige d'arrondi raccordant la masse de diélectrique avec la première ombelle ayant un rayon de courbure supérieur à celui susceptible d'amener une surcharge diélectrique dangereuse de l'isolant;

c) d'une deuxième armature constituée par une couche conductrice recouvrant la surface externe de la masse de la matière diélectrique, à l'exception du col comportant les ombelles, et s'arrêtant après une première gorge, au début de la zone convexe de la première ombelle, constituant ainsi un déflecteur de champ électrique, ladite deuxième armature étant connectée à un fil conducteur relié à une deuxième borne correspondant à la deuxième armature;

d) d'une masse isolante extérieure solide en résine synthétique ou élastomère recouvrant par surmoulage la masse de matière diélectrique et la deuxième armature et laissant apparaître extérieurement:

— les deux bornes d'armature, dont l'une, axiale sert de support avec filetage,

— ainsi qu'un support axial avec filetage noyé dans la masse isolante,

cette masse isolante faisant partie d'une pièce d'appareillage électrique telle qu'un isolateur support, un transformateur de courant ou de tension.

D'autres caractéristiques et avantages de l'invention apparaîtront au cours de la description ci-après qui en donne quelques exemples non limitatifs de réalisation pratique et qui sont illustrés par les dessins joints.

Brève description des figures

Dans ces dessins:

Les figures 1, 2 et 3 ont déjà servi ci-dessus à expliquer l'état de la technique, à savoir:

La figure 1 est une vue schématique montrant la disposition de diviseurs capacitifs entre une ligne sous tension et la masse.

La figure 2 est une coupe verticale axiale d'un premier exemple de diviseur capacitif avec pastille de céramique en tant que diélectrique.

La figure 3 est une coupe verticale axiale d'un deuxième exemple de diviseur capacitif existant avec des armatures cylindriques.

Les figures 4 et 5 représentent deux premières formes de réalisation de diviseur capacitif suivant l'invention en coupe verticale axiale.

La figure 6 représente en coupe verticale axiale une troisième forme de diviseur capacitif de l'invention dont l'armature extérieure est réalisée en tôle emboutie.

La figure 7 est une vue en plan de l'armature extérieure du diviseur capacitif représenté à la figure 6.

La figure 8 est une vue en coupe verticale axiale d'une quatrième forme de réalisation du diviseur capacitif de l'invention constitué de trois éléments similaires à ceux qui sont représentés dans l'une ou l'autre des réalisations représentées aux figures 4 à 6.

Les figures 9 à 14 représentent, en coupe diamétrale et suivant l'axe de la tige, différentes formes de réalisation de la première armature en forme de disque.

Description de quelques modes de réalisation

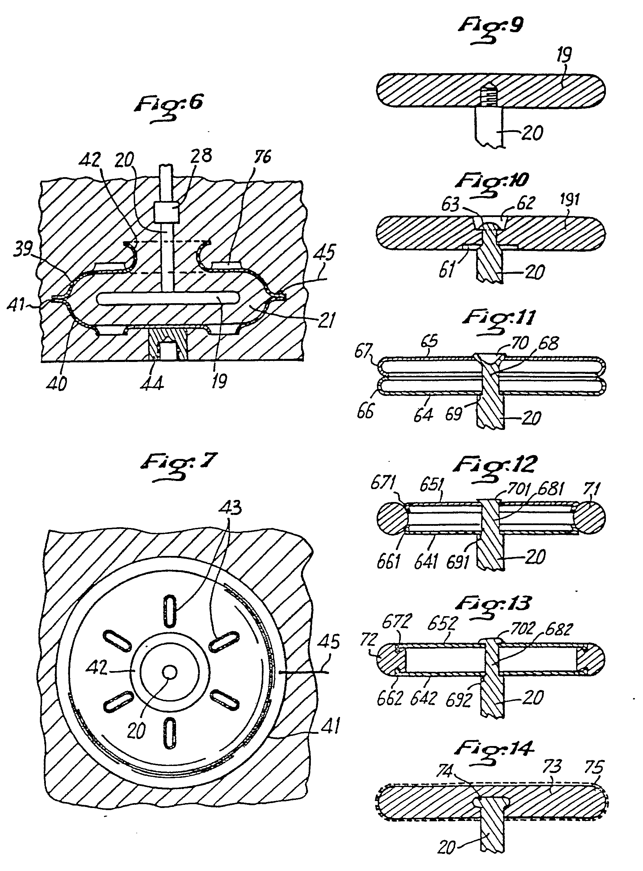

En se reportant à la figure 4, le diviseur capacitif est composé d'une première armature (19), supportée par une tige coaxiale (20), d'une masse de matière diélectrique solide (21), moulée autour de l'armature (19) et de la tige (20), d'une deuxième armature (22) et d'une masse isolante extérieure (23).

L'armature (19) est constituée par un disque épais généralement plan, à bords arrondis tandis que l'armature (22) entoure l'armature (19) de façon à constituer un espace rempli par la masse de matière diélectrique (21) moulée autour de l'armature (19) et de la naissance de la tige (20) support. La paroi externe de la masse de matière diélectrique (21) est en tous points à une distance à peu près constante de l'armature (19) et de sa tige (20). Par conséquent, l'armature (22) s'arrête en (24) où elle forme un col arrondi suivant un rayon de courbure maintenant le gradient électrique à l'intérieur de la masse (21) à un niveau admissible. Comme au niveau (24), à l'extrémité du col, l'armature (22) forme une arête vive, on s'arrange pour que cette arête soit dirigée vers l'extérieur sous une première ombelle (25) constituée à l'aide de la masse de matière diélectrique (21). On prévoit aussi une deuxième ombelle (26) après laquelle la masse de matière diélectrique (21) constitue un rentrant (27) au fond duquel se trouve noyé un écrou (28) vissé sur le haut de la tige coaxiale (20) et dans lequel se visse une autre tige coaxiale (29). La tige (29) est solidaire d'une pièce insérée (30), située dans l'axe du diviseur capacitif, et comportant un filetage (31). La pièce (30) constitue l'une des bornes extérieures, celle relative à l'armature (19).

L'armature (22) est reliée à la borne extérieure (32), sur le côté du diviseur, par un fil conducteur (33) qui s'enroule autour du col (24) en serrant convenablement la deuxième armature (22) à cet endroit pour assurer le contact approprié. Une deuxième pièce insérée (34), avec un filetage (35), est moulée dans la masse isolante extérieure (23) de façon à être coaxiale aux tiges (20) et (29) ainsi qu'avec l'autre pièce insérée (30). La pièce insérée (34) est complètement isolée des autres éléments du diviseur capacitif et elle est aussi complètement isolée de la masse, c'est-à-dire de la borne extérieure (32) du fil (33) et de l'armature (22).

En fait, le diviseur capacitif a une forme de révolution comme tous les éléments qui le constituent. En particulier, la première armature (19) a la forme d'un disque circulaire; les tiges (20) et (29) sont cylindriques tout comme les pièces insérées (30) et (34); l'armature (22) a une forme aplatie ronde tout comme les ombelles (25) et (26).

Les masses isolantes (21) et (23) sont, de préférence, en résine époxy et le disque ou armature (19) ainsi que les tiges (20) et (29) tout comme l'écrou (28) et les pièces insérées (30) et (34) sont en aluminium ou un alliage à base de ce métal car l'aluminium et la résine époxy ont des coefficients de dilatation proches l'un de l'autre si bien que les contraintes mécaniques sont réduites en cas de variations de température en particulier lors du moulage.

Il y a plusieurs manières de réaliser la deuxième armature (22).

Une première manière, représentée à la figure 4, consiste à appliquer sur l'extérieur de la masse de matière diélectrique (21) une couche conductrice par dépôt de métal ou de peinture conductrice, à base de carbone, par exemple. Cette application peut se faire au pistolet, par trempage ou autre. On peut aussi réaliser une métallisation sous vide ou encore une électrophorèse de métal.

Une deuxième façon de réaliser l'armature extérieure (22) est illustrée à la figure 5 où l'on surmoule autour de la masse de matière diélectrique (21) une couche relativement épaisse de matière semi-conductrice (36) dans laquelle est noyé le fil conducteur (37) relié à la borne (38).

Une troisième manière (figures 6 et 7) de réaliser l'armature (22) consiste à prévoir deux coupelles de métal (39) et (40) de même diamètre que l'on assemble par leur bord extérieur (41) par soudure, rivetage ou autre, lesdites coupelles (39) et (40) constituant une boîte enfermant la première armature (19) et la masse de matière diélectrique (21). Pour faciliter la pénétration de celle-ci, outre le col (42) réalisé dans la coupelle (39) autour de la tige (20) avec des formes similaires à celles du col (24), on prévoit des ouvertures médianes (43) qui sont poinçonnées avec leurs bords (76) rabattus vers l'extérieur avec un rayon suffisant qui tourne sa convexité vers l'armature (19) toujours de façon à éviter toutes surcharges diélectriques dangereuses dans l'isolant (21). Dans cette forme de réalisation, on est obligé, pendant le moulage, de maintenir l'ensemble des coupelles (39) et (40) par des griffes ou au moins un support axial (44) similaire à la pièce insérée (34). Le support (44) maintient convenablement la deuxième armature par rapport à la première armature (19) lors de la coulée de la matière isolante diélectrique qui est la même entre les deux armatures (19) et (39, 40) qu'à l'extérieur de cette dernière armature. On prévoit de relier les coupelles (39, 40) à la borne extérieure (non représentée) par un fil conducteur (45).

La figure 8 représente une autre forme de réalisation dans laquelle on a voulu augmenter la capacité de l'appareil en augmentant la surface des armatures. Cette augmentation de surface est réalisée en prévoyant une première armature constituée de plusieurs disques (46), (47), (48) régulièrement espacés sur une même tige (49), et une deuxième armature (50) conformée à la distance voulue de la première armature (46) à (49) par une masse de matière diélectrique (51) se prolongeant par des ombelles (52, 53), le tout étant surmoulé par une masse isolante (54) dans laquelle sont noyées les pièces insérées (55) et (56) ainsi qu'une borne (57). La pièce insérée (55) est reliée à la tige (49) par une tige (58) et un écrou (59) tandis que la borne (57) est reliée à l'armature (50) par un fil conducteur (60). La pièce insérée (56) est totalement isolée des autres éléments de l'appareil par la masse isolante (54).

Les techniques de fabrication des appareils représentés aux figures 4 à 8 sont bien connues. Elles appartiennent, en ce qui concerne les coupelles (39) et (40), à la technique de l'emboutissage ou du formage. Les autres pièces constitutives sont réalisées par des techniques habituelles de moulage de matières plastiques ou de la fonderie en général. Le bon résultat que l'on obtient du diviseur constitué suivant l'invention dépend, en particulier, du maintien en bonne position relative des deux armatures du diviseur capacitif. Il faut, notamment, que les distances entre les armatures (19) et (22) (ou 36 et 39, 40 ou 50) soient rigoureusement constantes.

En général, toutes les pièces de l'appareil sont de révolution et en particulier, les deux armatures, ce qui facilite leur maintien à bonne distance.

Les techniques de fabrication de la première armature (19) sont très variées et vont maintenant être expliquées ainsi qu'illustrées par les figures 9 à 14.

La façon la plus simple (figure 9) consiste à prévoir un disque plein en aluminium dans lequel se rive ou se visse l'extrémité de la tige (20).

La figure 10 a représenté la coupe d'un disque (191) en élastomère semi-conducteur emmanché sur la tige (20). Le disque (191) est renforcé à l'endroit du contact avec la tige (20), par une rondelle (61) sur laquelle s'appuie un épaulement de la tige (20). De l'autre côté du disque, on prévoit un évidement (62) pour loger la tête (63) d'un rivet constitué à l'extrémité de la tige (20).

A la figure 11, on a représenté deux coupelles identiques (64) et (65) en métal embouti avec bords extérieurs (66) et (67) rabattus vers l'intérieur et dirigés l'un vers l'autre de façon à ce qu'ils soient en contact l'un de l'autre. L'extrémité de la tige (20) comporte une partie de diamètre plus petit (68) qui forme un épaulement (69) sur lequel reposent les bords d'un trou central de la coupelle (64). Un trou similaire est prévu dans la coupelle (65) sur les bords duquel s'appuie un rivet (70) constitué dans l'extrémité de la partie (68).

La figure 12 représente une configuration similaire avec deux coupelles (641) et (651) s'appuyant respectivement sur un épaulement (691) et un rivet (701) avec leurs bords (671) et (661) tournés l'un vers l'autre mais les rebords sont ici écartés l'un de l'autre par un anneau ou jonc (71) en élastomère semi-conducteur à profil circulaire lisse, faisant saillie sur la périphérie.

La figure 13 représente une autre configuration apparentée à celle de la figure 12 avec la seule différence que les bords (662) et (672) sont parallèles à l'axe de la tige (20) et s'encastrent dans un anneau ou jonc (72) en élastomère semi-conducteur qui a un profil extérieur circulaire lisse faisant saillie sur la périphérie.

La figure 14 représente un disque (13) en matière moulée isolante qui est bien fixé à l'extrémité de la tige (20) comportant une tête (74). Le disque (73) en matière moulée isolante est métallisé extérieurement par une couche conductrice que l'on a repéré par (75), ladite couche étant convenablement mise en contact électrique avec la tige axiale (20).

On a constaté dans la pratique que la réalisation de l'invention permettait une fabrication en série de l'appareillage avec une grande constance de la qualité et des performances. L'appareil constitué de cette façon est très fiable car les contraintes électriques et mécaniques sont réduites. Les surfaces arrondies évitent la formation de fissures et améliorent la répartition du champ électrique. On peut d'ailleurs choisir les rayons de courbure des armatures ou électrodes à volonté.

La forme du diviseur de l'invention donne le maximum de capacité pour le minimum d'encombrement.

## Revendications

1. Diviseur de tension capacitif moyenne tension comprenant un condensateur dont les armatures (19, 22) sont moulées dans une matière isolante et évitant les saillies à faible rayon de courbure dirigées l'une vers l'autre, caractérisé par le combinaison:

a) d'une première (19) constituée par au moins un disque épais, plan, à bords arrondis de rayon de courbure supérieur en tous points à la valeur susceptible d'amener une surcharge diélectrique. dangereuse de l'isolant et qui est fonction du gradient électrique admissible dans celui-ci, ladite première armature (19) étant supportée par une tige coaxiale (20) cylindrique conductrice reliée à une borne (30) correspondant à la première armature (19), éventuellement par au moins une deuxième tige (29) reliée par vissage à la première (20);

b) d'une masse de matière diélectrique solide (21) moulée autour de ladite première armature (19) et de la naissance de la tige support (20) à partir du disque, la paroi externe de ce diélectrique étant en tous points à une distance à peu près constante de cette première armature (19) et de sa tige (20), sauf au niveau de la partie médiane de la tige support (20) où cette masse forme un col (24) avec des ombelles (25, 26) arrondies entourant ladite tige et un rentrant (27) le long de la tige, la section comprenant l'axe de la tige d'arrondi raccordant la masse de diélectrique (21) avec la première ombelle (25) ayant un rayon de courbure supérieur à celui susceptible d'amener une surcharge diélectrique dangereuse de l'isolant;

c) d'une deuxième armature (22) constituée par une couche conductrice recouvrant la surface externe de la masse de la matière diélectrique (21), à l'exception du col (24) comportant les ombelles (25, 26), et s'arrêtant après une première gorge, au début de la zone convexe de la première ombelle (25), constituant ainsi un déflecteur de champ électrique, ladite deuxième armature (22) étant connectée à un fil conducteur (33) relié à une deuxième borne (32) correspondant à la deuxième armature (22);

d) d'une masse isolante extérieure (23) solide en résine synthétique ou élastomère recouvrant par surmoulage la masse de matière diélectrique (21) et la deuxième armature (22) et laissant apparaître extérieurement:

— les deux bornes (30, 32) d'armatures (19, 22), dont l'une (30), axiale, sert de support avec filetage (31),

— ainsi qu'un support axial (34) avec filetage (35) noyé dans la masse isolante (23),

cette masse isolante (23) faisant partie d'une pièce d'appareillage électrique tel qu'un isolateur support, un transformateur de courant ou de tension.

2. Diviseur de tension capacitif, tel que défini dans la revendication 1, caractérisé par le fait que la couche conductrice constituant la deuxième armature (22) est réalisée par dépôt extérieur de métal ou de peinture conductrice par projection au pistolet, métallisation sous vide, électrophorèse.

3. Diviseur capacitif, tel que défini dans la revendication 1, caractérisé par le fait que la couche conductrice est réalisée par un surmoulage de matière semi-conductrice autour de la masse de matière diélectrique (21).

4. Diviseur capacitif, tel que défini dans la revendication 1, caractérisé par le fait que la deuxième armature (22) est réalisée par deux coupelles de métal (39, 40) de même diamètre assemblées par leurs bords extérieurs (41) par soudure, rivetage ou autre, lesdites coupelles comportant des ouvertures médianes (43), pour laisser le passage à la matière isolante moulée (21), et centrales pour laisser le passage à la tige support (20) de première armature (19), lesdites ouvertures (43) étant poinçonnées avec leurs bords rabattus vers l'extérieur avec un rayon suffisant tournant sa convexité vers la première armature (19) et sa tige (20) de façon à éviter toute surcharge diélectrique dangereuse de l'isolant (21), ladite deuxième armature (22) comportant au moins un support dont l'un (44) est axial, avec filetage, restant visible de l'extérieur et servant à maintenir l'armature (22), lors du moulage de l'ensemble avec une matière isolante (21) recouvrant l'extérieur et pénétrant à l'intérieur de la deuxième armature (22) par les ouvertures des coupelles (39, 40), jusqu'à la première armature (19) pour noyer l'ensemble mais maintenir en bonne position relative les deux armatures (19, 22).

5. Diviseur capacitif, tel que défini dans l'une quelconque des revendications précédentes, caractérisé par le fait qu'on prévoit une première armature constituée de plusieurs disques (46, 47, 48) régulièrement espacés sur une même tige (49) et une deuxième armature (50) conformée à la distance voulue de la première armature.

6. Diviseur capacitif, tel que défini dans l'une quelconque des revendications précédentes, caractérisé par le fait que la première armature constituée par au moins un disque emmanché sur une tige axiale est pleine et en aluminium.

7. Diviseur capacitif, tel que défini dans l'une quelconque des revendications précédentes, caractérisé par le fait que la première armature constituée par au moins un disque emmanché sur une tige axiale est pleine et en élastomère semi-conducteur.

8. Diviseur capacitif, tel que défini dans l'une quelconque des revendications précédentes, caractérisé par le fait que la première armature constituée par au moins un disque emmanché sur une tige axiale (20) est faite de deux coupelles (64, 65) identiques en métal embouti avec bords extérieurs (66, 67) rabattus vers l'intérieur et en contact l'un de l'autre.

9. Diviseur capacitif, tel que défini dans l'une quelconque des revendications précédentes, caractérisé par le fait que la première armature constituée par au moins un disque emmanché sur une tige axiale (20) est faite de deux coupelles (641, 651) identiques en métal embouti avec bords extérieurs (661, 671) rabattus vers l'intérieur et dirigés l'un vers l'autre en étant écartés l'un de l'autre par un anneau on jonc (71) en élastomère semi-conducteur à profil circulaire lisse, faisant saillie sur la périphérie.

10. Diviseur capacitif, tel que défini dans l'une quelconque des revendications précédentes, caractérisé par le fait que la première armature constituée par au moins un disque emmanché sur une tige axiale (20) est faite de deux coupelles (642, 652) identiques en métal embouti avec bords extérieurs (662, 672) rabattus vers l'intérieur parallèlement à l'axe et dirigés l'un vers l'autre pour s'encastrer dans des encoches d'un anneau on jonc (72) en élastomère semi-conducteur à profil circulaire lisse faisant saillie sur la périphérie.

11. Diviseur capacitif, tel que défini dans l'une quelconque des revendications précédentes, caractérisé par le fait que la première armature constituée par au moins un disque emmanché sur une tige axiale est faite d'une pièce isolante moulée, métallisée extérieurement, ladite métallisation étant reliée électriquement à la tige axiale.

12. Diviseur capacitif, tel que défini dans l'une quelconque des revendications précédentes, caractérisé par le fait que les pièces métalliques sont en métal dont le coefficient de dilatation est le plus voisin possible de celui de la matière isolante ou diélectrique, tel que de l'aluminium, par exemple, quand l'isolant est une résine époxy.

13. Diviseur capacitif, tel que défini dans l'une quelconque des revendications précédentes, caractérisé par le fait que les armatures ont des formes de révolution.

**Patentansprüche**

1. Kapazitiver Spannungsteiler für Mittelspannung mit einem Kondensator, dessen Beläge (19, 22) in einer Isoliermasse vergossen und frei von aufeinander zu gerichteten Vorsprüngen mit geringem Krümmungsradius sind, gekennzeichnet durch die Kombination aus

a) einem ersten Belag (19), der aus mindestens einer dicken, ebenen Scheibe mit abgerundeten Rändern besteht, deren Krümmungsradius überall größer ist, als der Wert, der eine gefährliche dielektrische Überlastung des Isolators verursachen kann und der von dem zulässigen elektrischen Gradient in diesem abhängig ist, wobei der erste Belag (19) von einer leitenden, zylindrischen, koaxial angeordneten Stange (20) getragen ist, die, gegebenenfalls über mindestens eine mit ihr verschraubte, zweite Stange (29), mit einem dem ersten Belag (19) entsprechenden Anschluß (30) verbunden ist;

b) einer festen dielektrischen Masse (21), in die der erste Belag (19) und das belagseitige Ende der Trägerstange (20) eingegossen sind und deren Außenwand an allen Stellen einen annähernd konstanten Abstand von dem ersten Belag (19) und seiner Stange (20) hat, und zwar abgesehen von der Höhe des mittleren Bereichs der Stange (20), wo die dielektrische Masse einen Hals (24) mit die Stange umgebenden, abgerundeten Wülsten (25, 26) und längs der Stange eine Aussparung (27) bildet, wobei der Krümmungsradius der die dielektrische Masse (21) mit dem ersten Wulst (25) verbindenden Abrundung in einem durch die Achse der Stange gelegten Schnitt größer ist, als der Radius, bei dem eine gefährliche dielektrische Überlastung des Isolators auftreten könnte;

c) einen zweiten Belag (22), der über einen leitenden Draht (33) mit einem zweiten, dem zweiten Belag (22) entsprechenden Anschluß (32) verbunden ist und aus einer leitenden Schicht besteht, die mit Ausnahme des Halses (24) mit den Wülsten (25, 26) die Außenfläche der dielektrischen Masse (21) bedeckt und nach einer ersten Nut zu Beginn des konvexen Bereichs des ersten Wulsts (25) unter Bildung eines Deflektors des elektrischen Kraftfeldes endet;

d) einer festen, äußeren Isolationsmasse (23) aus Kunstharz oder einem Elastomer, in die die dielektrische Masse (21) und der zweite Belag (22) eingegossen sind und die die beiden Anschlüsse (30, 32) der Beläge (19, 22), von denen der axial angeordnete Anschluß (30) ein mit einem Gewinde (31) versehenes Halteorgan bildet, und ein mit einem Gewinde (35) versehenes, in die Isoliermasse (23) eingelassenes, axiales Halteorgan (34) von außen zugänglich läßt und einen Teil eines elektrischen Organs, beispielsweise eines Tragisolators, eines Stromwandlers oder eines Spannungswandlers, bildet.

2. Kapazitiver Spannungsteiler nach Anspruch 1, dadurch gekennzeichnet, daß die den zweiten Belag (22) bildende leitende Schicht durch Aufbringung von Metall, durch Auftragen eines leitenden Materials mit Hilfe einer Spritzpistole, durch Aufdampfen oder durch Elektrophorese gebildet ist.

3. Kapazitiver Spannungsteiler nach Anspruch 1, dadurch gekennzeichnet, daß die leitende Schicht aus einem auf die dielektrische Masse (21) aufgegossenen Halbleitermaterial besteht.

4. Kapazitiver Spannungsteiler nach Anspruch 1, dadurch gekennzeichnet, daß der zweite Belag (22) aus zwei Schalen (39, 40) aus Metall und mit gleichem Durchmesser besteht, die an ihren Außenrändern (41) miteinander verschweißt, vernietet od.dgl. sind und zentrale Öffnungen für die Durchführung der Trägerstange (20) des ersten Belags (19) sowie in einem Zwischenbereich Öffnungen (43) für den Durchgang der eingegossenen Isolationsmasse (21) aufweisen, die zur Vermeidung jeder gefährlichen dielektrischen Überlastung des Isolators (21) so ausgestanzt sind, daß ihre Ränder mit einem ausreichend großen Krümmungsradius nach außen gebogen und auf den ersten Belag (19) und seine Stange (20) zu konvex sind, wobei der zweite Belag (22) mindestens ein axiales, mit Gewinde versehenes Halteorgan (44) besitzt, das von außen sichtbar bleibt und die Fixierung des Belages (22) bei der Vergießung mit einer Isolationsmasse (21) gewährleistet, die den zweiten Belag (22) außen bedeckt und durch Öffnungen der Schalen (39, 40) bis zum ersten Belag (19) ins Innere eindringt, sodaß die beiden Beläge (19, 22) vergossen und in der korrekten Stellung zueinander gehalten sind.

5. Kapazitiver Spannungsteiler nach einem der vorhergehenden Ansprüche, gekennzeichnet durch einen ersten Belag, der aus mehreren, in regelmäßigen Abständen auf einer gemeinsamen Stange (49) angeordnet Scheiben (46, 47, 48) besteht, und einem zweiten Belag (50), der in dem gewünschten Abstand von dem ersten Belag angeordnet ist.

6. Kapazitiver Spannungsteiler nach einem der vorhergehenden Ansprüche, dadurch gekennzeichnet, daß der erste Belag, der aus mindestens einer auf eine axiale Stange aufgesteckten Scheibe besteht, voll ausgebildet ist und aux Aluminium besteht.

7. Kapazitiver Spannungsteiler nach einem der vorhergehenden Ansprüche, dadurch gekennzeichnet, daß der erste Belag, der aus mindestens einer auf eine axiale Stange aufgesteckten Scheibe besteht, voll ausgebildet ist und aus einem halbleitenden Elastomer besteht.

8. Kapazitiver Spannungsteiler nach einem der vorhergehenden Ansprüche, dadurch gekennzeichnet, daß der erste Belag, der aus mindestens einer auf eine axiale Stange (20) aufgesteckten Scheibe besteht, aus zwei gleichen Schalen (64, 65) aus tiefgezogenem Metall gebildet ist, deren Außenränder (66, 67) nach Innen gebogen und miteinander in Kontakt sind.

9. Kapazitiver Spannungsteiler nach einem der vorhergehenden Ansprüche, dadurch gekennzeichnet, daß der erste Belag, der aus mindestens einer auf eine axiale Stange (20) aufgesteckten Scheibe besteht, aus zwei gleichen Schalen (641, 651) aus tiefgezogenem Metall gebildet ist, deren Außenränder (661, 671) nach innen gebogen, aufeinander zu gerichtet und durch einen Ring (71) aus einem halbleitenden Elastomer voneinander entfernt gehalten sind, der ein glattes, kreisförmiges, am Umfang hervorstehendes Profil aufweist.

10. Kapazitiver Spannungsteiler nach einem der vorhergehenden Ansprüche, dadurch gekennzeichnet, daß der erste Belag, der aus mindestens einer auf eine axiale Stange (20) aufgesteckten Scheibe besteht, aus zwei gleichen Schalen (642, 652) aus tiefgezogenem Metall gebildet ist, deren Außenränder parallel zur Achse nach innen gebogen sind, aufeinander zu gerichtet sind und in Nuten eines Rings (72) aus einem halbleitenden Elastomer mit einem glatten, kreisförmigen, am Umfang vorstehenden Profil eingreifen.

11. Kapazitiver Spannungsteiler nach einem der vorhergehenden Ansprüche, dadurch gekennzeichnet, daß der erste Belag, der aus mindestens einer auf eine axiale Stange aufgesteckten Scheibe besteht, aus einem außen metallisierten Isolationsgußteils gebildet ist, wobei die Metallisierung elektrisch mit der axialen Stange verbunden ist.

12. Kapazitiver Spannungsteiler nach einem der vorhergehenden Ansprüche, dadurch gekennzeichnet, daß die Metallteile aus einem Metall bestehen, dessen Ausdehnungskoeffizient möglichstnahe bei dem des isolierenden oder dielektrischen Stoffs liegt, und zwar beispielsweise Aluminium, wenn der Isolator aus einem Epoxyharz besteht.

13. Kapazitiver Spannungsteiler nach einem der vorhergehenden Ansprüche, dadurch gekennzeichnet, daß die Beläge die Form von Rotationskörpern haben.

**Claims**

1. Medium tension capacitive voltage divider comprising a capacitor whereof the plates (19, 22) are moulded in an insulating material and presenting surfaces having a small radius of curvature directed towards each other, characerised by the combination of:

a) a first plate (19) constituted by at least one flat thick disc, comprising rounded edges with a radius of curvature greater at all points than the value which is able to bring about a dangerous dielectric overload of the insulating material and which depends on the admissible electrical gradient in the latter, the said first plate (19) being supported by a conducting cylindrical coaxial rod (20) connected to a terminal (30) corresponding to the first plate (19), possibly by at least a second rod (29) connected by screwing to the first rod (20);

b) a mass of solid dielectric material (21) moulded around said first plate (19) and the point where the support rod (20) is connected to the disc, the outer surface of this dielectric material being at all points at a nearly constant distance from this first plate (19) and from its rod (20) except in the vicinity of the central part of the support rod (20) where this material forms a neck (24) with rounded lobes (25, 26) surrounding the said rod and a re-entrant portion (27) along the rod, the section comprising the axis of the rounded rod connecting the dielectric material (21) to the first lobe (25) having a radius of curvature greater than that which is able to bring about a dangerous dielectric overload of the insulating material;

c) a second plate (22) constituted by a conducting layer covering the outer surface of the mass of dielectric material (21), with the exception of the neck (24) comprising the lobes (25, 26) and stopping after a first groove, at the beginning of the convex region of the first lobe (25), thus constituting an electrical field deflector, the said second plate (22) being connected to a conducting wire (33) connected to a second terminal (32) corresponding to the second plate (22);

d) a solid outer insulating mass (23) of synthetic resin or elastomer covering the mass of dielectric material (21) and the second plate (22) by being moulded around the latter and exposing externally:

— the two terminals (30, 32) of the plates (19, 22), whereof one axial terminal (30) serves as a support with a screw thread (31), and

— an axial support (34) with a screw thread (35) embedded in the insulating mass (23), this insulating mass (23) forming part of a piece of electrical equipment such as a support insulator or a current or voltage transformer.

2. Capacitive voltage divider, as defined in claim 1, characterised by the fact that the conducting layer constituting the second plate (22) is produced by an external deposition of metal or conducting paint by spraying with a gun, metallisation under vacuum, electrophoresis.

3. Capacitive divider as defined in claim 1, characterised by the fact that the conducting layer is produced by over-moulding with semi-conducting material around the mass of dielectric material (21).

4. Capacitive divider, as defined in claim 1, characterised by the fact that the second plate (22) is produced by two metal cups (39, 40) of the same diameter connected at their outer edges (41) by welding, riveting or the like, the said cups comprising central openings (43) in order to allow the passage of the moulded insulating material (21) and of the support rod (20) for the first plate (19), the said openings (43) being formed by punching with their edges bent outwardly with a sufficient radius to turn its convex part towards the first plate (19) and its rod (20) in order to prevent any dangerous dielectric overload of the insulating material (21), the said second plate (22) comprising at least one support whereof one (44) is axial with a screw thread, externally exposed and serving to retain the plate (22) at the time of moulding of the assembly with the insulating material (21) covering the outside and penetrating inside the second plate (22) through the openings in the cups (39, 40) as far as the first plate (19) in order to encapsulate the assembly but keep the two plates (19, 22) in a correct relative position.

5. Capacitive divider as defined in any one of the preceding claims, characterised by the fact that there is provided a first plate constituted by several discs (46, 47, 48) spaced in a uniform manner on the same rod (49) and a second plate (50) arranged at the desired distance from the first plate.

6. Capacitive divider as defined in any one of the preceding claims, characterised by the fact that the first plate constituted by at least one disc fitted on an axial rod is solid and made from aluminium.

7. Capacitive divider as defined in any one of the preceding claims, characterised by the fact that the first plate constituted by at least one disc fitted on an axial rod is solid and made from a semi-conducting elastomer.

8. Capacitive divider as defined in any one of the preceding claims, characterised by the fact that the first plate constituted by at least one disc fitted on an axial rod (20) is made from two identical cups (64, 65) of stamped metal with outer edges (66, 67) bent towards the inside and in contact with each other.

9. Capacitive divider as defined in any one of the preceding claims, characterised by the fact that the first plate constituted by at least one disc fitted on an axial rod (20) is made from two identical cups (641, 651) of stamped metal with outer edges (661, 671) bent inwardly and directed towards each other and being separated from each other by a ring (71) of semi-conducting elastomer having a smooth circular contour and projecting at the periphery.

10. Capacitive divider as defined in any one of the preceding claims, characterised by the fact that the first plate constituted by at least one disc fitted on an axial rod (20) is made from two identical cups (642, 652) of stamped metal with outer edges (662, 672) bent inwardly parallel to the axis and directed towards each other in order to sit in notches in a ring (72) of semi-conducting elastomer having a smooth circular contour projecting at the periphery.

11. Capacitive divider as defined in any one of the preceding claims, characterised by the fact that the first plate constituted by at least one disc fitted on an axial rod is made from a moulded insulating member, which is metallised externally, the said metallisation being connected electrically to the axial rod.

12. Capacitive divider as defined in any one of the preceding claims, characterised by the fact that the metal parts are made from a metal whose coefficient of expansion is as close as possible to that of the insulating or dielectric material, such as aluminium, for example, when the insulating material is an epoxy resin.

13. Capacitive divider as defined in one of the preceding claims, characterised by the fact that the plates have shapes of revolution.

0 042 788

Fig.1

Fig.2

Fig.3

Fig.4

Fig.5

Fig.8

1

0 042 788

Fig:9

Fig:6

Fig:10

Fig:11

Fig:7

Fig:12

Fig:13

Fig:14

2